# EUROPÄISCHE PATENTSCHRIFT

(11) **EP 3 143 066 B1**
(45) Veröffentlichungstag und Bekanntmachung des Hinweises auf die Patenterteilung: **21.03.2018**
(21) Anmeldenummer: 15723484.0
(22) Anmeldetag: 13.05.2015
(51) Int. Cl.: C08G 59/40, C08G 65/24, C08G 65/333, C09D 163/00, C08G 65/26

(54) **GUANIDINHALTIGE POLYOXYALKYLENE UND VERFAHREN ZUR HERSTELLUNG**
POLYOXYALKYLENES CONTAINING GUANIDINE AND METHOD FOR THE PRODUCTION THEREOF
POLYOXYALKYLENES CONTENANT DE LA GUANIDINE ET PROCÉDÉ DE PREPARATION ASSOCIE

(30) Priorität: 16.05.2014 DE 102014209355
(43) Veröffentlichungstag der Anmeldung: 22.03.2017
(73) Patentinhaber: Evonik Degussa GmbH, 45128 Essen (DE)
(72) Erfinder: FIEDEL, Olga, 45131 Essen (DE); SCHUBERT, Frank, 47506 Neukirchen-Vluyn (DE); FIEDEL, Michael, 45131 Essen (DE)
(86) Internationale Anmeldenummer: PCT/EP2015/060592
(87) Internationale Veröffentlichungsnummer: WO 2015/173302

(56) Entgegenhaltungen:
- WO-A1-2008/059159
- US-A- 3 391 113
- US-A- 4 268 644
- US-A- 5 723 133
- US-A1- 2011 130 524
- BONDUELLE C.V. ET AL: "Dendritic Guanidines as efficient analogues of cell penetrating peptides", PHARMACEUTICALS, Bd. 3, 2010, Seiten 636-666, XP002742157,

## Beschreibung

Gegenstand der Erfindung sind Polyoxyalkylene, die in der Seitenkette Guanidingruppen enthalten, sowie ein Verfahren zu ihrer Herstellung.

### Stand der Technik:

Unter Guanidinen (Guanidinderivaten, guanidinhaltigen Verbindungen) werden im Rahmen dieser Erfindung Iminoderivate des Harnstoffs verstanden, die mindestens eine Imin-Einheit enthalten, an deren sp2-hybridisierten Kohlenstoff zwei Aminogruppen gebunden sind. Guanidingruppen haltige Verbindungen kommen in der Natur in Form von Aminosäure Arginin oder organischen Säure Kreatin vor und sind als Muskelaufbaupräparate kommerziell erhältlich.

Guanidine zählen zu den stärksten bekannten organischen Basen, wodurch sich für diese Verbindungsklasse solche Anwendungen wie Härter für Epoxidharze oder Alkoxysilylgruppen tragende Systeme (DE 10 2013 216787) sowie basische Katalysatoren für eine Vielzahl organischer Reaktionen ergeben. Des Weiteren haben einige Guanidinverbindungen eine fungizide bzw. biozide Wirkung (EP 0534501).

Bedingt durch die hohe Basizität liegt Guanidin nahezu ausschließlich in protonierter Form vor und kann als Stukturelement höhere Polarität bzw. Hydrophilie hervorrufen und Wasserstoffbrückenbindungen bilden. Aufgrund dessen fanden beispielsweise Alkylguanidine als kationische Emulgatoren in den kosmetischen Bereich Eingang (EP 1671615). Guanidinverbindungen üben auch auf die Haut und Haar eine positive Wirkung aus, indem sie die Widerstandsfähigkeit dieser erhöhen. So beansprucht eine Patentschrift von Kao Corporation im Jahr 1995 (US 5723133) Guanidinderivate für kosmetische Formulierungen und lobt ihre feuchtigkeitsspendende Wirkung aus. Auch die Patentschrift EP 1844106 beschreibt Guanidin funktionalisierte Siloxane als eine Komponente der Shampoos und Haarkonditionierer zur Stärkung der Widerstandsfähigkeit, Reparatur des geschädigten Haares bei gleichzeitiger Verbesserung der Kämmbarkeit und Weichheit. Vor dem Hintergrund dieser mannigfaltigen Einsatzmöglichkeiten ist es von großer Wichtigkeit weitere Guanidingruppen tragende Verbindungen zu erschließen.

Bis dato ist in der Literatur lediglich die Synthese von α,ω-guanidinfunktionalisierten Polyethern bekannt (WO2008059159A1). Somit mangelt es nach aktuellem Stand der Technik an einem Verfahren, das gestattet, einen Polymerer mit mehr als zweifacher Guanidinfunktionalität herzustellen, wobei die Anzahl der eingeführten Guanidingruppen im Polymer durch eine einfache Variation der Verfahrensbedingungen steuerbar ist.

Aufgabe der vorliegenden Erfindung war deshalb die Bereitstellung von Polymeren mit einer einstellbaren Anzahl an Guanidinogruppen.

Gegenstand der vorliegenden Erfindung ist daher die Bereitstellung von Guanidingruppen haltigen Polymeren wie in den Ansprüchen beschrieben.

Ein weiterer Gegenstand der vorliegenden Erfindung ist ein Verfahren zur Herstellung der erfindungsgemäßen Guanidingruppen haltigen Polymere.

Ein weiterer Gegenstand der vorliegenden Erfindung ist die Verwendung der erfindungsgemäßen Guanidingruppen haltigen Polymere sowie die Verwendung der Produkte des erfindungsgemäßen Verfahrens.

Die erfindungsgemäßen Guanidingruppen haltigen Polymere, das erfindungsgemäße Verfahren zur Herstellung der Guanidingruppen haltigen Polymere, sowie die erfindungsgemäße Verwendung der Guanidingruppen haltigen Polymere und der Verfahrensprodukte werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden nachfolgend %-Angaben gemacht, so handelt es sich, wenn nicht anders angegeben, um Angaben in Gewichts-%. Bei Zusammensetzungen beziehen sich die %-Angaben, wenn nicht anders angegeben auf die Gesamtzusammensetzung. Werden nachfolgend Mittelwerte angegeben, so handelt es sich, wenn nicht anders angegeben, um Massenmittel (Gewichtsmittel). Werden nachfolgend Messwerte angegeben, so wurden diese Messwerte, wenn nicht anders angegeben, bei einem Druck von 101325 Pa und einer Temperatur von 23°C ermittelt.

Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen.

Bevorzugt weisen die erfindungsgemäßen Guanidingruppen haltigen Polymere das Strukturelement 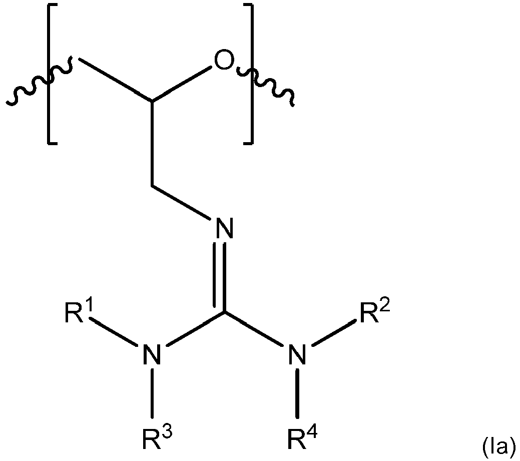 mindestens einem kammständig auf, wobei
R¹, R², R³ und R⁴ unabhängig voneinander ein linearer, cyclischer oder verzweigter, aliphatischer gesättigter oder ungesättigter Kohlenwasserstoffrest mit 1 bis zu 30 C-Atomen ist oder ein aromatischer Kohlenwasserstoffrest mit 6 bis zu 30 C-Atomen ist, der auch Heteroatome enthalten kann.

Der Begriff kammständig bedeutet, dass in Formel (1a) die als Schlangenlinien dargestellten Bindungen Teil eines Polyethers sind und jeweils mindestens eine Oxyalkylengruppe, welche optional auch substituiert sein kann, anschließt. Bevorzugt weisen die erfindungsgemäßen Guanidingruppen haltigen Polymere das Strukturelement der Formel (1a) nicht terminal auf.

Bevorzugt sein die Reste R¹, R², R³ und R⁴ unabhängig voneinander ein aliphatischer gesättigter oder ungesättigter Kohlenwasserstoffrest mit 1 bis zu 30 C-Atomen, mehr bevorzugt mit 2 bis 8 C-Atomen, insbesondere bevorzugt sind die Reste R¹, R², R³ und R⁴ unabhängig voneinander gleich Methyl, Ethyl, Propyl, iso-Propyl, n-Butyl, iso-Butyl, Pentyl oder Hexyl.

Weiterhin bevorzugt sind die Reste R¹, R², R³ und R⁴ alle gleich und können aus den oben bevorzugten aliphatischer gesättigter oder ungesättigter Kohlenwasserstoffresten ausgewählt sein.

Weiterhin bevorzugt sind die Reste R¹, R², R³ und R⁴ alle gleich Methyl.

Mehr bevorzugte erfindungsgemäße Guanidingruppen haltige Polymere genügen der Formel (I)

Z(-X-M1ₘ₁M2ₘ₂M3ₘ₃M4ₘ₄-M5ₘ₅-M6ₘ₆-J)ᵢ (I)

genügen, mit
M1 = 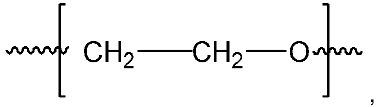
M2 = 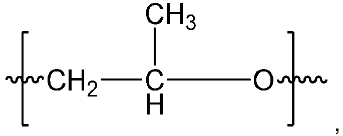
M3 = 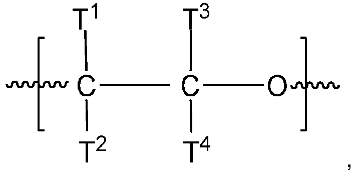 wobei T¹, T², T³ und T⁴ unabhängig voneinander Wasserstoff oder lineare, cyclische oder verzweigte, aliphatische oder aromatische, gesättigte oder ungesättigte Kohlenwasserstoffreste mit 1 bis zu 12 C-Atomen, vorzugsweise 2 bis 8 C-Atomen, sind, die gegebenenfalls Halogenatome enthalten können, mit der Maßgabe, dass T¹, T², T³ und T⁴ nicht so gewählt sind, dass M3 gleich M1 oder M2 ist, ggf. können jeweils zwei Reste aus T¹, T², T³ und T⁴ auch gemeinsam einen drei- bis achtgliedrigen Ring bilden,
M4 = 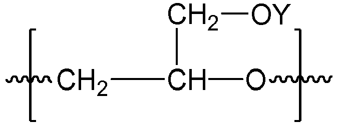 wobei Y unabhängig voneinander ein linearer, cyclischer oder verzweigter, aliphatischer oder aromatischer, gesättigter oder ungesättigter Kohlenwasserstoffrest mit 1 bis 30 C-Atomen, bevorzugt mit 2 bis 15 C-Atomen ist, der auch Heteroatome enthalten kann,
M5 = 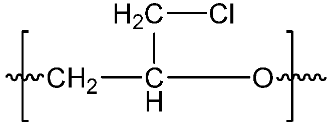
M6 = 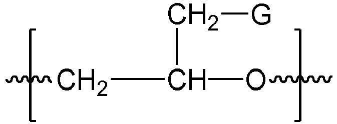 wobei G ein Guanidinrest der Formel, 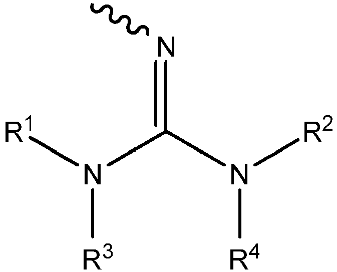 ist, mit
   R¹, R², R³ und R⁴ unabhängig voneinander ein linearer, cyclischer oder verzweigter, aliphatischer gesättigter oder ungesättigter Kohlenwasserstoffrest mit 1 bis zu 30 C-Atomen ist oder ein aromatischer Kohlenwasserstoffrest mit 6 bis zu 30 C-Atomen ist, der auch Heteroatome enthalten kann,
i = 1 bis 10, bevorzugt 1 bis 4, insbesondere bevorzugt 1 bis 3,
   m1, m2, m3, m4 und m5 = jeweils unabhängig voneinander 0 bis 500,
   m6 größer gleich 1 bis 100, bevorzugt 1,5 bis 50, mehr bevorzugt 2 bis 40 und insbesondere bevorzugt größer 2 bis 30,
   wobei die Summe von m1 und m2 mindestens gleich 3, bevorzugt mindestens 5 sein muss.
X = unabhängig voneinander O, NH, N-Alkyl, N-Aryl oder S, bevorzugt Sauerstoff
Z = ist unabhängig voneinander ein i-funktioneller linearer, cyclischer oder verzweigter, aliphatischer gesättigter oder ungesättigter Kohlenwasserstoffrest mit 1 bis zu 30 C-Atomen, bevorzugt mit 2 bis zu 30 C-Atomen, weiter bevorzugt mit 3 bis 25, mehr bevorzugt mit mehr als 3 bis zu 20, besonders bevorzugt mit 4 bis 15 C-Atomen oder Z ist ein aromatischer Kohlenwasserstoffrest mit 6 bis zu 30 C-Atomen, bevorzugt mehr als 6 bis zu20, insbesondere bevorzugt 8 bis 12 C-Atomen,
J unabhängig voneinander Wasserstoff, ein linearer, cyclischer oder verzweigter, aliphatischer oder aromatischer, gesättigter oder ungesättigter Kohlenwasserstoffrest mit 1 bis zu 30 C-Atomen, ein Carbonsäurerest mit 1 bis 30 Kohlenstoffatomen oder ein mit Heteroatomen substituierter, funktioneller, organischer, gesättigter oder ungesättigter Rest,

Die hier wiedergegebenen Indexzahlen und die Wertbereiche der angegebenen Indizes können als Mittelwerte der möglichen statistischen Verteilung der tatsächlichen vorhandenen Strukturen und/oder deren Mischungen verstanden werden. Dies gilt auch für als solche an sich exakt wiedergegebene Strukturformeln, wie beispielsweise für Formel (I).

Die erfindungsgemäßen Guanidingruppen haltigen Polymere enthaltend das Strukturelement der Formeln (la) und bevorzugt die Verbindungen der Formel (I) weisen bevorzugt keine Doppelbindungen resultierend aus einer Chlorwasserstoffeliminierung auf, mehr bevorzugt keine Doppelbindungen außer denen im Substituenten Z, insbesondere bevorzugt keine Doppelbindungen.

Bevorzugt nimmt m1 Werte von 0 bis 200, mehr bevorzugt 1 bis 50 und insbesondere bevorzugt.2 bis 30 an.

Weiterhin bevorzugt nimmt m2 Werte von 1 bis 400, weiter bevorzugt 2 bis 300, mehr bevorzugt 3 bis 200, weitermehr bevorzugt 4 bis 150 und insbesondere bevorzugt 5 bis 100 an.

Weiterhin bevorzugt nimmt m3 Werte von 0 bis 50, mehr bevorzugt größer 0 bis 30 und insbesondere bevorzugt von 1 bis 15 an.

Weiterhin bevorzugt nimmt m4 Werte von 0 bis 50, mehr bevorzugt größer 0 bis 30 und insbesondere bevorzugt von 1 bis 15 an.

Weiterhin bevorzugt nimmt m5 Werte von 0 bis 25, mehr bevorzugt 0 bis 15 und insbesondere bevorzugt von 0 bis 6 an.

Bevorzugt sind die Reste R¹, R², R³ und R⁴ unabhängig voneinander lineare oder verzweigte Kohlenwasserstoffe mit 1 bis 8 Kohlenstoffatomen, mehr bevorzugt alle identisch und insbesondere bevorzugt alle gleich Methylgruppen.

Bevorzugt sind die Reste T¹, T², T³ und T⁴ unabhängig voneinander Wasserstoff oder lineare oder verzweigte Kohlenwasserstoffe mit 2 bis 8 Kohlenstoffatomen, mit der Maßgabe, dass T¹, T², T³ und T⁴ nicht so gewählt sind, dass M3 gleich M1 oder M2 ist.

Die erfindungsgemäßen Guanidingruppen haltigen Polymere enthaltend das Strukturelement der Formel (la) und bevorzugt die Verbindungen der Formel (I) weisen eine gewichtsmittlere Molmasse von 200 bis 50.000 g/mol, bevorzugt von 400 bis 35.000 g/mol und besonders bevorzugt von 700 bis 25.000 g/mol auf.

Die erfindungsgemäßen Guanidingruppen haltigen Polymere enthaltend das Strukturelement der Formeln (la) und bevorzugt die Verbindungen der Formel (I) können in unterschiedlichem Umfang Chlormethyl- und Guanidingruppenfunktionalisiert sein. Der molare Anteil der Einheiten mit dem Index m5 und m6 beträgt vorzugsweise von 1 bis 30 %, bevorzugt von 2 bis 25 % und insbesondere bevorzugt auf 3 bis 20 % bezogen auf die Summe der Einheiten mit den Indizes m1, m2, m3, m4, m5 und m6, die 100 % ergibt.

Der bevorzugt vorhandene organische Rest Z ist vorzugsweise ein Rest der Verbindung der Formel (II)

Z-(OH)ᵢ (II)

ohne OH-Gruppen.

Bevorzugte Verbindungen der Formel (II) sind Verbindungen der Gruppe der Alkohole, Polyetherole oder Phenole, vorzugsweise aus Allylalkohol, Butanol, Octanol, Dodecanol, Stearylalkohol, 2-Ethylhexanol, Cyclohexanol, Benzylalkohol, Ethylenglykol, 1,3- Propylenglykol, 1,2-Propylenglykol, 1,4-Butandiol, 1,6-Hexandiol, Trimethylolpropan, Glycerin, Pentaerythritol, Sorbitol, Xylitol oder Mannitol.

Die Reste Z weisen vorzugsweise eine Molmasse von 15 bis 4983 g/mol, insbesondere 41 bis 3000 g/mol.

Bevorzugt ist der Index i gleich 1. Bevorzugte Monoalkohole sind n-Alkanole, vorzugsweise Allylalkohol, Butanol, Octanol, Dodecanol, Stearylalkohol oder verzweigte Mono-Alkanole, vorzugsweise 2-Ethylhexanol.

Die erfindungsgemäßen oder erfindungsgemäß hergestellten Guanidingruppen haltigen Polymere enthaltend das Strukturelement der Formel (la) und bevorzugt die Verbindungen der Formel (I) sind vorzugsweise farblose bis gelb-braune Produkte, die klar oder opak sein können.

Bevorzugte erfindungsgemäße Guanidingruppen haltige Verbindungen der Formel (I) sind die, in denen die Indices und Reste
i = 1 bis 2,
m1 = 0 bis 30,
m2 = 3 bis 500,
m3 = 0 bis 20,
m4 = 0 bis 20,
m5 = 0 bis 10,
m6 = 1 bis 30, und
J = Wasserstoff,
X = Sauerstoff,
Y = ein Allylrest,
R¹, R², R³ und R⁴ unabhängig voneinander lineare oder verzweigte Kohlenwasserstoffe mit 1 bis 8 Kohlenstoffatomen,
T¹, T², T³ und T⁴ unabhängig voneinander Wasserstoff oder lineare oder verzweigte Kohlenwasserstoffe mit 2 bis 8 Kohlenstoffatomen, mit der Maßgabe, dass T¹, T², T³ und T⁴ nicht so gewählt sind, dass M3 gleich M1 oder M2 ist, und
Z = unabhängig voneinander ein- oder zweiwertiger linearer oder verzweigter gesättigter oder ungesättigter Kohlenwasserstoffrest mit 2 bis 18 Kohlenstoffatomen, sind.

Insbesondere bevorzugte erfindungsgemäße Guanidingruppen haltige Verbindungen der Formel (I) sind die, wo die Indices und Reste
i = 1 bis 2,
m1 = 0 bis 20,
m2 = 5 bis 200,
m3 = 0 bis 10,
m4 = 0 bis 10
m5 = 0 bis 3,
m6 = 1 bis 20, und
J = Wasserstoff,
X = Sauerstoff,
R¹, R², R³ und R⁴ gleich Methylgruppen, und
Z = unabhängig voneinander Allyl- oder Butylgruppen,
sind.

Die verschiedenen Fragmente der in der Formel (I) angegebenen Oxyalkylenreste können statistisch verteilt sein. Statistische Verteilungen können blockweise aufgebaut sein mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Die hier wiedergegebenen Indexzahlen und die Wertbereiche der angegebenen Indizes können als Mittelwerte der möglichen statistischen Verteilung der tatsächlichen vorhandenen Strukturen und/oder deren Mischungen verstanden werden. Dies gilt auch für als solche an sich exakt wiedergegebene Strukturformeln, wie beispielsweise für Formeln (I), (II) und (III).

Wo immer Moleküle beziehungsweise Molekülfragmente ein oder mehrere Stereozentren aufweisen oder aufgrund von Symmetrien in Isomere unterschieden werden können oder aufgrund anderer Effekte z.B. eingeschränkter Rotation in Isomere unterschieden werden können, sind alle möglichen Isomere von der vorliegenden Erfindung mit eingeschlossen. Isomere sind dem Fachmann bekannt, in besonderer Weise wird auf die Definitionen von Prof. Kazmaier der Universität des Saarlandes verwiesen, z.B. http://www.uni-saarland.de/fak8/kazmaier/PDF_files/vorlesungen/Stereochemie%20Strassb%20Vorla ge.pdf.

Die erfindungsgemäßen Guanidingruppen haltigen Polymere enthaltend das Strukturelement der Formel (la) und bevorzugt die Verbindungen der Formel (I) werden mit dem nachfolgend beschriebenen erfindungsgemäßen Verfahren erhalten.

Im bevorzugten erfindungsgemäßen Verfahren zur Herstellung von Guanidingruppen haltigen Polymeren enthaltend das Strukturelement 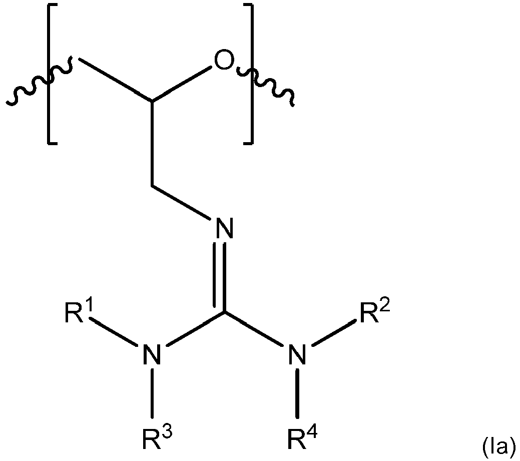 wird in einem ersten Schritt (a) eine Verbindung der Formel (II)

Z-(OH)i (II)

wobei
Z = ist unabhängig voneinander ein i-funktioneller linearer, cyclischer oder verzweigter, aliphatischer gesättigter oder ungesättigter Kohlenwasserstoffrest mit 1 bis zu 30 C-Atomen, bevorzugt mit 2 bis zu 30 C-Atomen, weiter bevorzugt mit 3 bis 25, mehr bevorzugt mit mehr als 3 bis zu 20, besonders bevorzugt mit 4 bis 15 C-Atomen oder Z ist ein aromatischer Kohlenwasserstoffrest mit 6 bis zu 30 C-Atomen, bevorzugt mehr als 6 bis zu20, insbesondere bevorzugt 8 bis 12 C-Atomen,
i = 1 bis 10, bevorzugt1 bis 4, insbesondere bevorzugt 1 bis 3,
unter Verwendung eines Doppelmetallcyanid-Katalysators, vorzugsweise Zinkhexacyanocobaltat mit Epichlorhydrin und weiteren Alkylenoxiden umgesetzt,
   und nachfolgend in einem zweiten Schritt (b) mit einer Guanidinverbindung der Formel (III) 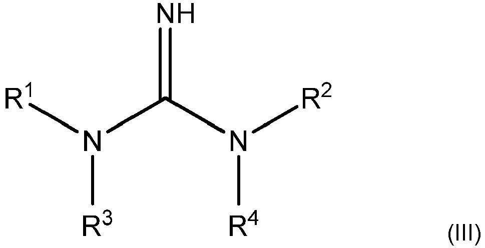 wobei
   R¹, R², R³ und R⁴ unabhängig voneinander ein linearer, cyclischer oder verzweigter, aliphatischer gesättigter oder ungesättigter Kohlenwasserstoffrest mit 1 bis zu 30 C-Atomen ist oder ein aromatischer Kohlenwasserstoffrest mit 6 bis zu 30 C-Atomen ist, der auch Heteroatome enthalten kann,
   umgesetzt.

Bevorzugt verläuft der zweite Verfahrensschritt (b) ohne Eliminierung zu ungesättigten Verbindungen ab.

Alkoxylierungsreaktionen werden typischerweise durch Umsetzung eines hydroxyfunktionellen Starters in Gegenwart eines geeigneten Katalysators mit Alkylenoxiden in einer Alkoxylierungsreaktion erhalten.

Ein Verfahren zur Herstellung solcher Alkoxylierungsprodukte bedient sich basischer Katalysatoren wie z.B. der Alkalihydroxide oder der Alkalimethylate. Nicht immer ist die alkalische Katalyse anwendbar, so z.B. beim Vorhandensein basenlabiler funktioneller Gruppen in den Edukten. So ist z.B. die Alkoxylierung von Epihalohydrinen unter Einsatz von Alkalihydroxiden oder Alkalimethylaten nicht praktikabel, da die Halogenatome in diesem Fall unkontrollierbaren Nebenreaktionen unterliegen.

Es wurden Verfahren zur sauren Katalyse mit HBF₄ und/oder Lewis-Säuren wie z.B. BF₃, AlCl₃ und SnCl₄ in der Alkoxylierung entwickelt (DE 10 2004 007561). Nachteilig bei der säurekatalysierten Polyethersynthese ist die mangelhafte Regioselektivität bei der Ringöffnung unsymmetrischer Oxirane wie Epichlorhydrin. Dies führt in nicht zu steuernder Weise zu Polyoxyalkylenketten mit teils sekundären und teils primären OH-Termini. Die erreichbaren Molmassen der Polyether sind außerdem infolge von Kettenabbrüchen und Nebenreaktionen im Vergleich zu anderen Katalysatoren relativ gering. Weiterhin weisen diese Produkte eine hohe Polydispersität auf.

Als Katalysatoren zur Herstellung von Polyethern sind Doppelmetallcyanid (DMC)-Katalysatoren bekannt. Die DMC-katalysierte Alkoxylierung verläuft sehr selektiv und schnell und erlaubt die Herstellung von Polyethern mit hohen Molmassen bei vergleichsweise niedriger Polydispersität. Die Herstellung und Verwendung von Doppelmetallcyanid-Komplexen als Alkoxylierungskatalysatoren ist bekannt und wird zum Beispiel in US 3,427,256, US 3,427,334, US 3,427,335, US 3,278,457, US 3,278,458 und US 3,278,459 offenbart. Spezielle DMC-Katalysatoren wie Zink-Cobalt-Hexacyanokomplexe sind in US 5,470,813 und US 5,482,908 beschrieben. Ein Vorteil dieser Katalysatoren ist ihre geringe Anwendungsmenge.

Im ersten Verfahrensschritt (a) des erfindungsgemäßen Verfahrens werden neben Epichlorhydrin bevorzugt Ethylenoxid, Propylenoxid und Alkylenoxide A3 = 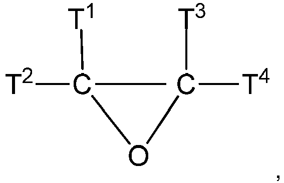 A4 = 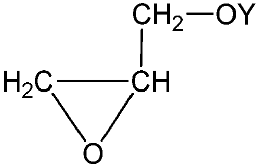
wobei T¹, T², T³ und T⁴ unabhängig voneinander Wasserstoff oder lineare, cyclische oder verzweigte, aliphatische oder aromatische, gesättigte oder ungesättigte Kohlenwasserstoffreste mit 1 bis zu 12 C-Atomen, vorzugsweise 2 bis 8 C-Atomen, sind, die gegebenenfalls Halogenatome enthalten können, mit der Maßgabe, dass T¹, T², T³ und T⁴ nicht so gewählt sind, dass A3 Ethylenoxid oder Propylenoxid ist, optional können jeweils zwei Reste aus T¹, T², T³ und T⁴ auch gemeinsam einen drei- bis achtgliedrigen Ring bilden,
wobei Y unabhängig voneinander ein linearer, cyclischer oder verzweigter, aliphatischer oder aromatischer, gesättigter oder ungesättigter Kohlenwasserstoffrest mit 1 bis 30 C-Atomen, bevorzugt mit 2 bis 15 C-Atomen ist, der auch Heteroatome enthalten kann,
   eingesetzt.

Die Alkylenoxide können als beliebige Mischungen und/oder auch einzeln und/oder alternieren eingesetzt werden.

Bevorzugt wird im ersten Verfahrensschritt (a) das Epichlorhydrin in einer Mischung mit einem oder mehreren weiteren Alkylenoxiden mit 2 bis 18 C-Atomen, vorzugsweise ausgewählt aus der Gruppe umfassend beispielsweise Ethylenoxid, Propylenoxid, 1,2-Butylenoxid und/oder Styroloxid und insbesondere bevorzugt in einer Mischung mit Propylenoxid eingesetzt.

Weiterhin bevorzugt wird Verfahrensschritt (a) bei einer Temperatur von 60 bis 250 °C, bevorzugt von 90 bis 160 °C und besonders bevorzugt etwa 100 bis 130 °C durchgeführt.

Weiterhin bevorzugt wird Verfahrensschritt (a) bei einem Druck von 0,02 bar bis 100 bar, bevorzugt 0,05 bis 20 bar durchgeführt.

Besonders bevorzugt wird Verfahrensschritt (a) bei einer Temperatur von 90 bis 130 °C und bei einem Druck von 0,01 bis 5 bar durchgeführt.

Die Reaktionsprodukte des erfindungsgemäßen Verfahrens nach dem ersten Verfahrensschritt (a) weisen ein oder mehrere chemisch gebundene Chloratome, bevorzugt von 2 bis 50, besonders bevorzugt von 2 bis 40, ganz besonders bevorzugt von 3 bis 25 Chloratome auf.

Weiterhin weisen die Reaktionsprodukte bevorzugt eine gewichtsmittlere Molmasse von 200 bis 50000 g/mol, bevorzugt 400 bis 35000 g/mol, besonders bevorzugt 700 bis 25000 g/mol auf.

Weiterhin weisen die Reationsprodukte bevorzugt eine Polydispersität von Mw/Mn von 1,0 bis 2, mehr bevorzugt von 1,08 bis 1,8, insbesondere bevorzugt von 1,1 bis 1,6 auf.

Besonders bevorzugte Reaktionsprodukte weisen 1 bis 20 Chloratome und eine gewichtsmittlere Molmasse von 800 bis 7000 g/mol auf.

Weitere besonders bevorzugt Reaktionsprodukte weisen 1 bis 20 Chloratome und eine gewichtsmittlere Molmasse von 800 bis 7000 g/mol und eine Polydispersität von 1,05 bis 1,6 auf.

Bevorzugt werden im zweiten Schritt (b) des erfindungsgemäßen Verfahrens die Produkte des ersten Schrittes (a) mit Guanidinen umgesetzt, wobei die Reste R¹, R², R³ und R⁴ unabhängig voneinander ein aliphatischer gesättigter oder ungesättigter Kohlenwasserstoffrest mit 1 bis zu 30 C-Atomen, mehr bevorzugt mit 2 bis 8 C-Atomen, insbesondere bevorzugt sind die Reste R¹, R², R³ und R⁴ unabhängig voneinander gleich Methyl, Ethyl, Propyl, iso-Propyl, n-Butyl, iso-Butyl, Pentyl oder Hexyl.

Weiterhin bevorzugt sind die Reste R¹, R², R³ und R⁴ alle gleich und können aus den oben bevorzugten aliphatischer gesättigter oder ungesättigter Kohlenwasserstoffresten ausgewählt sein.

Weiterhin bevorzugt sind die Reste R¹, R², R³ und R⁴ alle gleich Methyl.

Die Substitution kann sowohl partiell als auch vollständig erfolgen. Der Nachweis der vollständigen Umsetzung erfolgt vorzugsweise 13C-NMR spektroskopisch.

Ein Vorteil des erfindungsgemäßen Verfahrens ist, dass die Substitution im zweiten Schritt (b) ohne Eliminierung zu ungesättigten Verbindungen abläuft. Aufgrund der starken Basizität wäre es zu erwarten gewesen, dass unter Chlorwasserstoffabspaltung ungesättigte Verbindungen gebildet werden, wie sie aus EP2676986 (US 2013/0345318) bekannt sind.

Weiterhin bevorzugt wird Verfahrensschritt (b) bei einer Temperatur von 40 bis 200 °C, und besonders bevorzugt etwa 70 bis 160 °C durchgeführt.

Weiterhin bevorzugt wird Verfahrensschritt (b) innerhalb von 1 Stunde bis zu 50 Stunden und besonders bevorzugt innerhalb von 2 bis 30 Stunden durchgeführt.

Weiterhin bevorzugt beträgt im Verfahrensschritt (b) die Menge der Guanidingruppen im Reaktionsgemisch in Bezug auf den Chlor-Gehalt im Copolymer von 0,5 bis 5 Äquivalente, besonders bevorzugt 1,0 bis 4 Äquivalente und insbesondere bevorzugt 1,5 bis 3 Äquivalente.

Weiterhin bevorzugt werden im Verfahrensschritt (b) die sich im Laufe der Reaktion gebildeten Salze mittels Filtration bzw. mittels Extraktion aus dem Produkt entfernt. Bevorzugte Extraktionsmittel sind Wasser bzw. wässrige Lösungen von Säuren oder Basen.

Weiterhin bevorzugt wird am Ende des Verfahrensschritts (b) der Überschuss an Guanidinverbindung abdestilliert, gegebenenfalls unter Anwendung von Unterdruck. Weiterhin besonders bevorzugt wird der Verfahrensschritt (b) des erfindungsgemäßen Verfahrens unter Einsatz von 1 bis 3 Äquivalenten von Tetramethylguanidin bei einer Temperatur von 90°C bis 160°C innerhalb von 8 bis 30 Stunden, wobei das Guanidiniumchlorid abfiltriert wird und der Überschuss an Tetramethylguanidin bei einer Temperatur von 100°C und einem Druck von 1,5 mbar abdestilliert wird.

Nach diesem Verfahren hergestellte Guanidin funktionalisierte Polyether enthalten mindestens eine Guanidingruppe. Sie haben ein gewichtsmittleres Molekulargewicht im Bereich von mindestens 200 g/mol bis 50000 g/mol, bevorzugt von 400 bis 35000 g/mol und insbesondere bevorzugt von 700 bis 25000g/mol.

Das erfinderische Verfahren weist optional einen dritten Schritt (c) auf, indem das Produkt des zweiten Schrittes (b) unter Bildung mindestens einer Guanidiniumgruppe weiter umgesetzt wird, wobei die Umsetzung zur Bildung von quaternären Verbindungen führt.

Unter Quaternisierung soll im Sinne der vorliegenden Erfindung neben der Umsetzung von Guanidingruppen haltigen Polyether der Formel (I) mit Alkylierungsmitteln auch die Umsetzung mit Säuren verstanden werden.

Dem Fachmann ist geläufig, dass die Protonierung von Guanidinverbindungen wie denen der Formel (I) abhängig vom pKs-Wert und evt. anwesenden Lösungsmitteln ist, prinzipiell sind Brönstedtsäuren zur Protonierung geeignet.

Bevorzugte Säuren können Mineralsäuren wie z.B.: Fluorwasserstoffsäure, Salzsäure, Bromwasserstoffsäure, Salpetersäure, Schwefelsäure, Phosphorsäure oder Amidosulfonsäure und organische Säuren wie z.B. Trifluoressigsäure, Michlsäure, Essigsäure und p-Toluolsulfonsäure sein, mehr bevorzugt organische Säuren, insbesondere Essigsäure. Besonders bevorzugte Säuren sind halogenfrei.

Als Alkylierungsmittel können Alkyl-, Aryl- oder Aralkylhalogenide wie z.B. Methylchlorid, Methylbromid, Methyliodid, Ethylbromid oder Ethyliodid, Benzylhalogenide, wie Benzylchlorid oder Benzylbromid; Di- Alkyl-, Aryl- oder Aralkylsulfate wie z.B. Dimethylsulfat oder Diethylsulfat, oder Oxoniumsalze wie z.B. Trimethyloxoniumchlorid, Trimethyloxoniumbromid, Trimethyloxoniumtetrafluoroborat, Triethyloxoniumchlorid, Triethyloxoniumbromid und Triethyloxoniumtetrafluoroborat eingesetzt werden, bevorzugt sind Dialkylsulfate, insbesondere bevorzugt ist Dimethylsulfat. Besonders bevorzugte Alkylierungsmittel sind halogenfrei.

Dem Fachmann ist geläufig, dass die quaternisierten Polyether in stöchiometrischen Verhältnissen die entsprechenden Anionen der verwendeten Alkylierungsmittel bzw. der verwendeten Säuren enthalten.

Es kann vorteilhaft sein, wenn die Anionen mit Hilfe eines Ionenaustauschers zumindest teilweise ausgetauscht werden. Die ausgetauschten Anionen ergeben sich aus der vorherigen Beladung der Ionenaustauscher in einer dem Fachmann geläufigen Art und Weise. Besonders vorteilhaft ist der Austausch von halogenhaltigen Anionen beziehungsweise Halogeniden gegen Anionen, die keine Halogenatome enthalten.

Einhergehend mit der Quaternisierung gewinnt das Polymer im Vergleich zum unmodifizierten Guanidingruppen haltigen Verbindungen an Substantivität auf textilen oder faserigen Substraten und auch an Einfluss auf deren Neigung zur elektrostatischen Aufladung.

Ein weiterer Gegenstand der Erfindung sind Guanidingruppen haltige Alkoxylierungsprodukte, vorzugsweise Verbindungen der Formel(l) hergestellt nach dem erfindungsgemäßen Verfahren.

Ein weiterer Gegenstand der Erfindung sind Zusammensetzungen enthaltend die erfindungsgemäßen Guanidingruppen haltigen Polymere enthaltend das Strukturelement der Formel (la) und bevorzugt die Verbindungen der Formel (I) oder die Produkte des erfindungsgemäßen Verfahrens.

Bevorzugt enthalten die erfindungsgemäßen Zusammensetzungen weiterhin Additive und Hilfsstoffe, die ausgewählt sein können aus der Liste enthaltend Sikkative, Verlaufsmittel, Farben und/oder Farbpigmente, Benetzungsmittel, Bindemittel, Reaktivverdünner, Tenside, thermisch aktivierbare Initiatoren, Photoinitiatoren, Katalysatoren, Emollients, Emulgatoren, Antioxidantien, Hydrotrope (oder Polyole), Fest- und Füllstoffe, Perlglanzadditive, Insektrepellentien, Anti-Foulingmittel, Nukleierungsmittel, Konservierungsstoffe, optische Aufheller, Flammschutzmittel, Antistatika, Treibmittel, Weichmacher, Parfüme, Wirkstoffe, Pflegeadditive, Überfettungsmittel, Lösungsmittel und/oder Viskositätsmodulatoren enthalten. Bevorzugte Zusätze sind Farben und/oder Farbpigmente.

Ein weiterer Gegenstand der Erfindung ist die Verwendung der erfindungsgemäßen Guanidingruppen haltigen Polymere enthaltend das Strukturelement der Formel (la) und bevorzugt die Verbindungen der Formel (I), sowie ihre Zusammensetzungen als Katalysatoren in der Herstellung von Polyurethanen, als Härter für Epoxidharze, Alkoxysilylgruppen tragende Systeme und weitere basisch katalysierbare Formulierungen.

Ein weiterer Gegenstand der Erfindung ist die Verwendung der erfindungsgemäßen Guanidingruppen haltigen Polymere enthaltend das Strukturelement der Formel (la) und bevorzugt die Verbindungen der Formel (I), sowie ihre Zusammensetzungen als Dispergieradditiv in Lacken, Farben, Beschichtungsmittel und Pigmentpasten.

### Beispiele:

Verwendete Chemikalien: N,N,N',N',-Tetramethylguanidin (99%) wurde von Sigma-Aldrich bezogen. Epichlorhydrin (≥ 99%) wurde von Fluka bezogen. Pluriol A 350 E wurde von BASF SE bezogen. Doppelmetallcyanidkatalysator wurde von Bayer AG und Propylenoxid sowie Ethylenoxid wurden von GHC Gerling, Holz & CO Handels GmbH bezogen. Allylglycidylether wurde von Acros Organics und Butylenoxid wurde von Merck KGaA bezogen.

### GPC-Messungen:

GPC-Messungen zur Bestimmung der Polydispersität und gewichtsmittleren Molmassen Mw wurden unter den folgenden Messbedingungen durchgeführt: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung der chlorhaltigen Polyether erfolgte gegen Polypropylenglykol-Standard (76-6000 g/mol).

### Bestimmung des Gehalts an Chlor:

Die Bestimmung des Gehalts an Chlor erfolgte mit Hilfe der ¹³C-NMR-Spektroskopie. Verwendet wurde ein NMR Spektrometer vom Typ Bruker Avance 400, die Proben wurden dazu in CDCl₃ gelöst.

### Bestimmung der Iodzahl (IZ):

Iodzahlen wurden nach der Methode DGF C-V 11 a (53) der Deutschen Gesellschaft für Fettwissenschaft bestimmt. Dabei wurden die Proben mit lodmonobromid umgesetzt, wobei der Überschuss durch Zugabe von Kaliumiodid in Iod überführt wurde, das zurücktitriert wurde.

### Beispiel A: Herstellung chlorhaltiger Polyether

### Beispiel A1: Vorprodukt PE 1:

In einem 5 Liter Autoklaven wurden als Starter 685,6 g Poly(oxyethylen)monoallylether (massenmittlere Molmasse Mw = 380 g/mol) und 1,5 g Zinkhexacyanocobaltat-DMC-Katalysator vorgelegt und unter Rühren auf 130 °C aufgeheizt. Der Reaktor wurde bis auf einen Innendruck von 30 mbar evakuiert, um evtl. vorhandene flüchtige Inhaltsstoffe destillativ zu entfernen. Zur Aktivierung des DMC-Katalysators wurde eine Portion von 60 g Propylenoxid zugeführt. Nach Anspringen der Reaktion und Innendruckabfall werden unter Kühlen zunächst weitere 454 g Propylenoxid zudosiert. Anschließend wurden unter gleichen Bedingungen 1029 g Propylenoxid und 327 g Epichlorhydrin im Gemisch innerhalb von 2,5 Stunden bei 130 °C und max. 2,9 bar Reaktorinnendruck zudosiert. Es schloss sich eine 45-minütige Nachreaktion bei 130 °C an. Abschließend wurden als Endblock weitere 514 g Propylenoxid bei 130 °C addiert. Nach einer erneuten Nachreaktion folgte eine Entgasungsstufe im Vakuum bei 130 °C. Das fast farblose niedrig viskose chlorhaltige Alkoxylierungsprodukt wurde auf unter 90 °C abgekühlt und aus dem Reaktor abgelassen. Das Produkt hatte It. GPC eine gewichtsmittlere Molmasse von 1556 g/mol, eine Polydispersität Mw/Mn von 1,18 und enthielt It. 13C-NMR-Analyse 2 mol Cl pro Molekül, IZ= 15.

### Beispiel A2: Vorprodukt PE 2 :

In einem 5 Liter Autoklaven wurden als Starter 615,6 g Poly(oxypropylen)-co-poly(oxyethylen)monoallylether (enthält 80 Gew.-% PO und 20 Gew.-% EO) mit der massenmittleren Molmasse Mw = 780 g/mol und 2,25 g Zinkhexacyanocobaltat-DMC-Katalysator vorgelegt und unter Rühren auf 130 °C aufgeheizt. Der Reaktor wurde bis auf einen Innendruck von 30 mbar evakuiert, um evtl. vorhandene flüchtige Inhaltsstoffe destillativ zu entfernen. Zur Aktivierung des DMC-Katalysators wurde eine Portion von 75 g Propylenoxid zugeführt. Nach Anspringen der Reaktion und Innendruckabfall wurden unter Kühlen zunächst weitere 155 g Propylenoxid zudosiert. Anschließend wurden unter gleichen Bedingungen 1469 g Propylenoxid und 439 g Epichlorhydrin im Gemisch innerhalb von 60 min bei 130 °C und max. 2,7 bar Reaktorinnendruck zudosiert. Es schloss sich eine 30-minütige Nachreaktion bei 130 °C an, in deren Verlauf der Reaktorinnendruck auf 0,5 bar sank. Abschließend wurden als Endblock weitere 230 g Propylenoxid bei 130 °C addiert. Nach einer erneuten Nachreaktion bei den gleichen Bedingungen folgte eine Entgasungsstufe. Dabei wurden flüchtige Anteile wie restliches Propylenoxid und Epichlorhydrin im Vakuum bei 130 °C abdestilliert. Das fast farblose, niedrig viskose chlorhaltige Alkoxylierungsprodukt wurde auf unter 90 °C abgekühlt und aus dem Reaktor abgelassen. Das Produkt hatte It. GPC eine gewichstmittlere Molmasse von 2754 g/mol, eine Polydispersität Mw/Mn von 1,28 und enthielt It. 13C-NMR-Analyse 6 mol Cl pro Molekül, IZ= 6,9 g lod/100g.

### Beispiel A3: Vorprodukt PE 3 :

In einem 5 Liter Autoklaven wurden als Starter 500 g Poly(oxypropylen)diol mit der Molmasse Mw = 767 g/mol (berechnet aus der OH-Zahl) und 1,3 g Zinkhexacyanocobaltat-DMC-Katalysator vorgelegt und unter Rühren auf 130 °C aufgeheizt. Der Reaktor wurde bis auf einen Innendruck von 30 mbar evakuiert, um evtl. vorhandene flüchtige Inhaltsstoffe destillativ zu entfernen. Zur Aktivierung des DMC-Katalysators wurde eine Portion von 75 g Propylenoxid zugeführt. Nach Anspringen der Reaktion und Innendruckabfall wurden unter Kühlen zunächst weitere 227 g Propylenoxid zudosiert. Anschließend wurden unter gleichen Bedingungen 1132 g Propylenoxid und 360 g Epichlorhydrin im Gemisch innerhalb von 60 min bei 130 °C und max. 2,7 bar Reaktorinnendruck zudosiert. Es schloss sich eine 30-minütige Nachreaktion bei 130 °C an, in deren Verlauf der Reaktorinnendruck auf 0,5 bar sank. Abschließend wurden als Endblock weitere 377 g Propylenoxid bei 130 °C addiert. Nach einer erneuten Nachreaktion bei den gleichen Bedingungen folgte eine Entgasungsstufe. Dabei wurden flüchtige Anteile wie restliches Propylenoxid und Epichlorhydrin im Vakuum bei 130 °C abdestilliert. Das fast farblose chlorhaltige Alkoxylierungsprodukt wurde auf unter 90 °C abgekühlt und aus dem Reaktor abgelassen. Das Produkt hatte It. GPC eine gewichstmittlere Molmasse von 3430 g/mol, eine Polydispersität Mw/Mn von 1,3 und enthielt It. 13C-NMR-Analyse 6 mol Cl pro Molekül.

### Beispiel A4: Vorprodukt PE 4:

In einem 5 Liter Autoklaven wurden als Starter 39 g Octanol und 1,5 g Zinkhexacyanocobaltat-DMC-Katalysator vorgelegt und unter Rühren auf 130 °C aufgeheizt. Der Reaktor wurde bis auf einen Innendruck von 30 mbar evakuiert, um evtl. vorhandene flüchtige Inhaltsstoffe destillativ zu entfernen. Zur Aktivierung des DMC-Katalysators wurde eine Portion von 80 g Propylenoxid zugeführt. Nach Anspringen der Reaktion und Innendruckabfall wurden unter Kühlen zunächst 171 g Allylglycidylether und 174 g Propylenoxid im Gemisch zudosiert. Anschließend wurden unter gleichen Bedingungen 1218 g Propylenoxid und 276 g Epichlorhydrin im Gemisch innerhalb von 60 min bei 130 °C und max. 2,7 bar Reaktorinnendruck zudosiert. Des Weiteren wurden 174 g PO im Gemisch mit 108 g BO zudosiert. Es schloss sich eine 40-minütige Nachreaktion bei 130 °C an, in deren Verlauf der Reaktorinnendruck auf 0,5 bar sank. Abschließend wurden als Endblock weitere 760 g Propylenoxid bei 130 °C addiert. Nach einer erneuten Nachreaktion bei den gleichen Bedingungen folgte eine Entgasungsstufe. Dabei wurden flüchtige Anteile wie restliche Epoxide im Vakuum bei 130 °C abdestilliert. Das fast farblose, hoch viskose chlorhaltige Alkoxylierungsprodukt wurde auf unter 90 °C abgekühlt und aus dem Reaktor abgelassen. Das Produkt hatte It. GPC eine gewichstmittlere Molmasse von 8764 g/mol, eine Polydispersität Mw/Mn von 1,5 und enthielt It. 13C-NMR-Analyse 9,6 mol Cl pro Molekül.

### Beispiel A5: Vorprodukt PE 5:

In einem 5 Liter Autoklaven wurden als Starter 396 g Pluriol A 350 E (Poly(oxyethylen)monomethylether mit der massenmittleren Molmasse Mw = 350 g/mol) und 1,5 g Zinkhexacyanocobaltat-DMC-Katalysator vorgelegt und unter Rühren auf 130 °C aufgeheizt. Der Reaktor wurde bis auf einen Innendruck von 30 mbar evakuiert, um evtl. vorhandene flüchtige Inhaltsstoffe destillativ zu entfernen. Zur Aktivierung des DMC-Katalysators wurde eine Portion von 40 g Ethylenoxid zugeführt. Nach Anspringen der Reaktion und Innendruckabfall wurden unter Kühlen zunächst weitere 209 g EO gefolgt von 657 g Propylenoxid zudosiert. Anschließend wurden unter gleichen Bedingungen 985 g Propylenoxid und 312 g Epichlorhydrin im Gemisch innerhalb von 60 min bei 130 °C und max. 2,7 bar Reaktorinnendruck zudosiert. Es schloss sich eine 40-minütige Nachreaktion bei 130 °C an, in deren Verlauf der Reaktorinnendruck auf 0,5 bar sank. Abschließend wurden als Endblock weitere 398 g Ethylenoxid bei 130 °C addiert. Nach einer erneuten Nachreaktion bei den gleichen Bedingungen folgte eine Entgasungsstufe. Dabei wurden flüchtige Anteile wie restliche Epoxide im Vakuum bei 130 °C abdestilliert. Das fast farblose, viskose chlorhaltige Alkoxylierungsprodukt wurde auf unter 90 °C abgekühlt und aus dem Reaktor abgelassen. Das Produkt hatte It. GPC eine gewichstmittlere Molmasse von 2126 g/mol, eine Polydispersität Mw/Mn von 1,1 und enthielt It. 13C-NMR-Analyse 3 mol Cl pro Molekül.

### Beispiel B: Umsetzung chlorhaltiger Polyether mit N,N,N',N'-Tetramethylguanidin

### Beispiel B1 :

In einem Mehrhalskolben mit KPG-Blatt-Rührer, Rückflusskühler, Inertgaszuleitung und Temperaturfühler wurden 100 g des chlorhaltigen Polyethers PE1 und 63 g von N,N,N',N'-Tetramethylguanidin (TMG) vorgelegt und unter Rühren auf 150 °C erwärmt. Nach 13 Stunden Reaktionszeit wurde das Rohprodukt mittels Filtration vom ausgefallenen Tetramethylguanidiniumhydrochlorid befreit, das überschüssige TMG wurde am Rotationsverdampfer (T= 110 °C, p<1 mbar) entfernt. Man erhielt ein klares gelbbraunes flüssiges Produkt. Die vollständige Substitution des Chlors, sowie die Abwesenheit von Doppelbindungen aus Eliminierungen, wurden mittels ¹³C-NMR nachgewiesen.

### Beispiel B2 :

In einem Mehrhalskolben mit KPG-Blatt-Rührer, Rückflusskühler, Inertgaszuleitung und Temperaturfühler wurden 230,9 g des chlorhaltigen Polyethers PE2 und 169,1 g von N,N,N',N'-Tetramethylguanidin (TMG) vorgelegt und unter Rühren auf 150 °C erwärmt. Nach 26 Stunden Reaktionszeit wurde das Rohprodukt mittels Filtration vom ausgefallenen Tetramethylguanidiniumhydrochlorid befreit, das überschüssige TMG wurde am Rotationsverdampfer (T= 110 °C, p<1 mbar) entfernt. Man erhielt ein klares braunes flüssiges Produkt. Die vollständige Substitution des Chlors, sowie die Abwesenheit von Doppelbindungen aus Eliminierungen, wurden mittels ¹³C-NMR nachgewiesen.

### Beispiel B3 :

In einem Mehrhalskolben mit KPG-Blatt-Rührer, Rückflusskühler, Inertgaszuleitung und Temperaturfühler wurden 80 g des chlorhaltigen Polyethers PE3 und 60,3 g von N,N,N',N'-Tetramethylguanidin (TMG) vorgelegt und unter Rühren auf 150 °C erwärmt. Nach 28 Stunden Reaktionszeit wurde das Rohprodukt mittels Filtration vom ausgefallenen Tetramethylguanidiniumhydrochlorid befreit, das überschüssige TMG wurde am Rotationsverdampfer (T= 110 °C, p<1 mbar) entfernt. Man erhielt ein klares braunes flüssiges Produkt. Die vollständige Substitution des Chlors und die Abwesenheit von Doppelbindungen wurden mittels ¹³C-NMR nachgewiesen.

### Beispiel B4 :

In einem Mehrhalskolben mit KPG-Blatt-Rührer, Rückflusskühler, Inertgaszuleitung und Temperaturfühler wurden 100 g des chlorhaltigen Polyethers PE4 und 44 g von N,N,N',N'-Tetramethylguanidin (TMG) vorgelegt und unter Rühren auf 150 °C erwärmt. Nach 30 Stunden Reaktionszeit wurde das Rohprodukt mittels Filtration vom ausgefallenen Tetramethylguanidiniumhydrochlorid befreit, das überschüssige TMG wurde am Rotationsverdampfer (T= 110 °C, p<1 mbar) entfernt. Man erhielt ein klares braunes flüssiges Produkt. Das Produkt enthielt nach ¹³C-NMR-Analyse 1,8 mol Chlor, 7,8 mol Guanidineinheiten pro Molekül und dabei keine Doppelbindungen.

### Beispiel B5 :

In einem Mehrhalskolben mit KPG-Blatt-Rührer, Rückflusskühler, Inertgaszuleitung und Temperaturfühler wurden 100 g des chlorhaltigen Polyethers PE5 und 39 g von N,N,N',N'-Tetramethylguanidin (TMG) vorgelegt und unter Rühren auf 150 °C erwärmt. Nach 21 Stunden Reaktionszeit wurde das Rohprodukt mittels Filtration vom ausgefallenen Tetramethylguanidiniumhydrochlorid befreit, das überschüssige TMG wurde am Rotationsverdampfer (T= 110 °C, p<1 mbar) entfernt. Man erhielt ein klares gelbbraunes flüssiges Produkt. Die vollständige Substitution des Chlors und die Abwesenheit von Doppelbindungen wurden mittels ¹³C-NMR nachgewiesen.

### Untersuchung der Dispergiereigenschaften

Die Verbindungen der Beispiele B1 und B2 wurden auf ihre Fähigkeit als Dispergieradditiv untersucht.

Zur Beurteilung von Pigmentkonzentraten wird üblicherweise ein Weißtint hergestellt und ein Rub Out Test durchgeführt. Der Weißlack für diese Prüfung wurde nach folgender Rezeptur hergestellt:

### Herstellung der Weißpaste:

| **Rohstoffe** | **Menge** |
|---|---|
| TD755W | 8,7 |
| VE- Wasser | 19,9 |
| Foamex 830 | 1,0 |
| Parmetol K 40 | 0,1 |
| Aerosil 200 | 0,3 |
| Kronos 2310 | 70,0 |
| *Gesamt* | *100,0* |

Die Anreibung erfolgte im Lau Disperser für 1h. Dem Ansatz wurden in einem Gewichtsverhältnis von 1 : 1 Glasperlen zugesetzt.

### Auflackung:

| **Rohstoffe** | **Menge** |
|---|---|
| Weißpaste | 45,0 |
| Neocryl XK 90 | 51,9 |
| Texanol | 1,6 |
| Tego Wet KL 245 | 0,5 |
| Visko Plus 3000 | 1,0 |
| *Gesamt* | *100,0* |

Für die Auflackung wurde 15 min mit dem Dissolver bei mittlerer Scherrate gerührt. Die Glasperlen wurden über ein wasserfestes Papiersieb abgesiebt.

### Herstellung der Weißtints

Die Weißtints mit den jeweiligen Farbpasten wurden nach folgenden Rezepturen angesetzt.

| | **Blau : Weiß 1 : 25** | | **Schwarz : Weiß 1 : 25** | | **Rot: Weiß 1 : 10** |
|---|---|---|---|---|---|
| | **30% Pigment** | **40% Pigment** | **30 % Pigment** | **33 % Pigment** | **60% Pigment** |
| Weißlack | 20,0 | 20,0 | 20,0 | 20,0 | 20,0 |
| Blaupaste 30 % | 0,84 | | | | |
| Blaupaste 40 % | | 0,63 | | | |
| Schwarzpaste 30 % | | | 0,84 | | |
| Schwarzpaste 33 % | | | | 0,76 | |
| Rotpaste 60 % | | | | | 1,1 |

Die Vermischung von Weißlack und Buntpaste erfolgte im Speedmixer bei 3000 Upm über 1 min. Danach wurde der Tint mit einem 100 µm Spiralrakel auf eine Kontrastkarte aufgebracht und nach 8 min Abluftzeit ein Rub Out mit dem Zeigefinger am unteren Ende der Karte durchgeführt. Der Farbunterschied (ΔE*) zwischen der geriebenen und der nicht geriebenen Fläche wurde nach der Durchtrocknung (ca. 2 -3 h) mit einem X-Rite SP62 vermessen.

### Farbmetrische Beurteilung und Berechung der Farbstärke:

Von den hergestellten Karten werden mittels Spektralphotometer (SP 68, X-Rite) die farbmetrischen Werte ermittelt. Die Ergebnisse sind in Tabelle #20 als L-a-b-Werte 10 angegeben. Zugleich wird die Farbstärke im Vergleich zu einer Referenzprobe berechnet. Je besser das Pigment in der Phase dispergiert wurde, desto höher ist die Farbstärke im Vergleich zur Referenzprobe. Die Referenzprobe wird per Definition mit 100% festgelegt.

Die Untersuchung zeigen die Vorteile der erfindungsgemäßen Substanzen in Bezug auf Farbtiefe gegenüber dem Stand der Technik

## Patentansprüche

1. Polymere Guanidingruppen haltige Verbindungen **dadurch gekennzeichnet, dass**
sie das Strukturelement 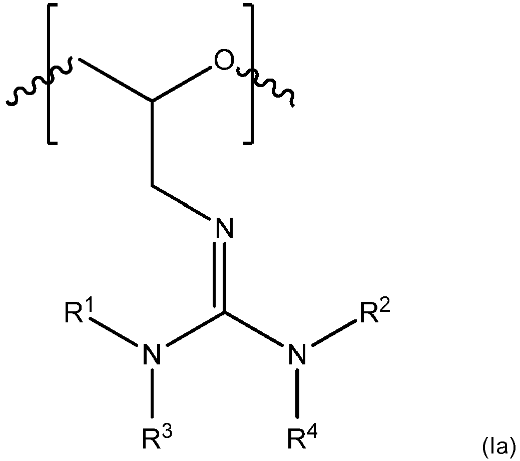 Mindestens einmal kammständig aufweisen,
wobei R¹, R², R³ und R⁴ unabhängig voneinander ein linearer, cyclischer oder verzweigter, aliphatischer gesättigter oder ungesättigter Kohlenwasserstoffrest mit 1 bis zu 30 C-Atomen ist oder ein aromatischer Kohlenwasserstoffrest mit 6 bis zu 30 C-Atomen ist, der auch Heteroatome enthalten kann,

2. Verbindungen nach Anspruch 1 **dadurch gekennzeichnet, dass** sie der Formel (I)
Z(-X-M1ₘ₁-M2ₘ₂-M3ₘ₃-M4ₘ₄-M5ₘ₅-M6ₘ₆-J)ᵢ (I)
genügen, mit
M1 = 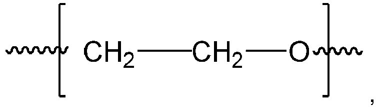
M2 = 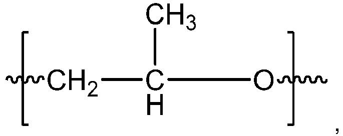
M3 = 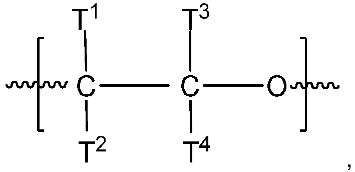 wobei T¹, T², T³ und T⁴ unabhängig voneinander Wasserstoff oder lineare, cyclische oder verzweigte, aliphatische oder aromatische, gesättigte oder ungesättigte Kohlenwasserstoffreste mit 1 bis zu 12 C-Atomen, vorzugsweise 2 bis 8 C-Atomen, sind, die gegebenenfalls Halogenatome enthalten können, mit der Maßgabe, dass T¹, T², T³ und T⁴ nicht so gewählt sind, dass M3 gleich M1 oder M2 ist, optional können jeweils zwei Reste aus T¹, T², T³ und T⁴ auch gemeinsam einen drei- bis achtgliedrigen Ring bilden,
M4 = 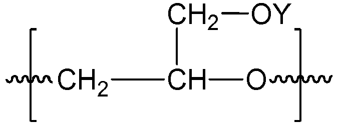 wobei Y unabhängig voneinander ein linearer, cyclischer oder verzweigter, aliphatischer oder aromatischer, gesättigter oder ungesättigter Kohlenwasserstoffrest mit 1 bis 30 C-Atomen, bevorzugt mit 2 bis 15 C-Atomen ist, der auch Heteroatome enthalten kann,
M5 = 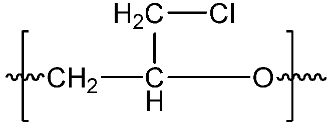
M6 = 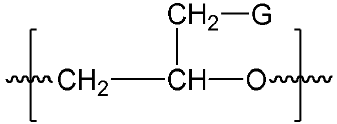 wobei G ein Guanidinrest der Formel, 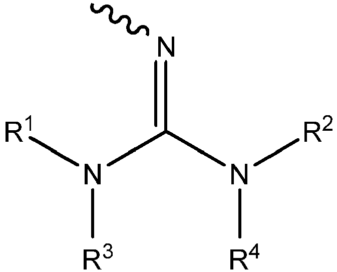 ist, mit
R¹, R², R³ und R⁴ unabhängig voneinander ein linearer, cyclischer oder verzweigter, aliphatischer gesättigter oder ungesättigter Kohlenwasserstoffrest mit 1 bis zu 30 C-Atomen ist oder ein aromatischer Kohlenwasserstoffrest mit 6 bis zu 30 C-Atomen ist, der auch Heteroatome enthalten kann,
i = 1 bis 10, bevorzugt 1 bis 4, insbesondere bevorzugt 1 bis 3, m1, m2, m3, m4 und m5 = jeweils unabhängig voneinander 0 bis 500,
m6 größer gleich 1 bis 100, bevorzugt 1,5 bis 50, mehr bevorzugt 2 bis 40 und insbesondere bevorzugt größer 2 bis 30,
wobei die Summe von m1 und m2 mindestens 3 sein muss,
X = unabhängig voneinander O, NH, N-Alkyl, N-Aryl oder S, bevorzugt Sauerstoff,
Z = ist unabhängig voneinander ein i-funktioneller linearer, cyclischer oder verzweigter, aliphatischer gesättigter oder ungesättigter Kohlenwasserstoffrest mit 1 bis zu 30 C-Atomen, bevorzugt mit 2 bis zu 30 C-Atomen, weiter bevorzugt mit 3 bis 25, mehr bevorzugt mit mehr als 3 bis zu 20, besonders bevorzugt mit 4 bis 15 C-Atomen oder Z ist ein aromatischer Kohlenwasserstoffrest mit 6 bis zu 30 C-Atomen, bevorzugt mehr als 6 bis zu20, insbesondere bevorzugt 8 bis 12 C-Atomen,
J unabhängig voneinander Wasserstoff, ein linearer, cyclischer oder verzweigter, aliphatischer oder aromatischer, gesättigter oder ungesättigter Kohlenwasserstoffrest mit 1 bis zu 30 C-Atomen, ein Carbonsäurerest mit 1 bis 30 Kohlenstoffatomen oder ein mit Heteroatomen substituierter, funktioneller, organischer, gesättigter oder ungesättigter Rest.

3. Verbindungen nach Anspruch 1 **dadurch gekennzeichnet, dass** die Indices und Reste der Formel (I)
i = 1 bis 2,
m1 = 0 bis 30,
m2 = 3 bis 500,
m3 = 0 bis 20,
m4 = 0 bis 20,
m5 = 0 bis 10,
m6 = 1 bis 30, und
J = Wasserstoff,
X = Sauerstoff,
Y = ein Allylrest,
R¹, R², R³ und R⁴ unabhängig voneinander lineare oder verzweigte Kohlenwasserstoffe mit 1 bis 8 Kohlenstoffatomen,
T¹, T², T³ und T⁴ unabhängig voneinander Wasserstoff oder lineare oder verzweigte Kohlenwasserstoffe mit 2 bis 8 Kohlenstoffatomen, mit der Maßgabe, dass T¹, T², T³ und T⁴ nicht so gewählt sind, dass M3 gleich M1 oder M2 ist, und
Z = unabhängig voneinander ein- oder zweiwertiger linearer oder verzweigter gesättigter oder ungesättigter Kohlenwasserstoffrest mit 2 bis 18 Kohlenstoffatomen,
sind.

4. Verbindungen nach Anspruch 1 **dadurch gekennzeichnet, dass** die Indices und Reste der Formel (I)
i = 1 bis 2,
m1 = 0 bis 20,
m2 = 5 bis 200,
m3 = bis 10
m4 = 0 bis 10
m5 = 0 bis 3
m6 = 1 bis 20, und
J = Wasserstoff,
X = Sauerstoff,
R¹, R², R³ und R⁴ gleich Methylgruppen, und
Z = unabhängig voneinander Allyl- oder Butylgruppen,
sind.

5. Verfahren zur Herstellung von Guanidingruppen haltigen Polymeren des Anspruchs 1, wobei in einem ersten Schritt (a) eine Verbindung der Formel (II)
Z-(OH)i (II)
wobei
Z = ist unabhängig voneinander ein i-funktioneller linearer, cyclischer oder verzweigter, aliphatischer gesättigter oder ungesättigter Kohlenwasserstoffrest mit 1 bis zu 30 C-Atomen, bevorzugt mit 2 bis zu 30 C-Atomen, weiter bevorzugt mit 3 bis 25, mehr bevorzugt mit mehr als 3 bis zu 20, besonders bevorzugt mit 4 bis 15 C-Atomen oder Z ist ein aromatischer Kohlenwasserstoffrest mit 6 bis zu 30 C-Atomen, bevorzugt mehr als 6 bis zu20, insbesondere bevorzugt 8 bis 12 C-Atomen,
i = 1 bis 10, 1 bis 4, 1 bis 3,
unter Verwendung eines Doppelmetallcyanid-Katalysators, vorzugsweise Zinkhexacyanocobaltat, mit Epichlorhydrin und weiteren Alkylenoxiden umgesetzt, und nachfolgend in einem zweiten Schritt (b) mit einer Guanidinverbindung der Formel (III) 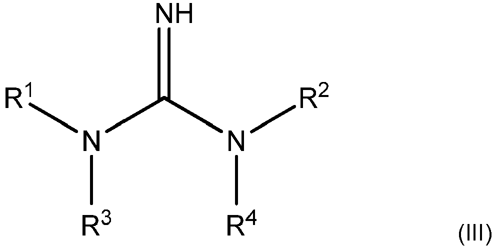 wobei
R¹, R², R³ und R⁴ unabhängig voneinander ein linearer, cyclischer oder verzweigter, aliphatischer gesättigter oder ungesättigter Kohlenwasserstoffrest mit 1 bis zu 30 C-Atomen ist oder ein aromatischer Kohlenwasserstoffrest mit 6 bis zu 30 C-Atomen ist, der auch Heteroatome enthalten kann,
umgesetzt werden.

6. Verfahren gemäß Anspruch 5 **dadurch gekennzeichnet, dass** der Verfahrensschritt (b) des erfindungsgemäßen Verfahrens unter Einsatz von 1 bis 3 Äquivalenten von Tetramethylguanidin bei einer Temperatur von 90°C bis 160°C innerhalb von 8 bis 30 Stunden, wobei das Guanidiniumchlorid abfiltriert wird und der Überschuss an Tetramethylguanidin bei einer Temperatur von 100°C und einem Druck von 1,5 mbar abdestilliert wird.

7. Verfahren gemäß Anspruch 5 oder 6 **dadurch gekennzeichnet, dass** es optional einen dritten Schritt (c) aufweist, indem das Produkt des zweiten Schrittes (b) unter Bildung mindestens einer Guanidiniumgruppe weiter umgesetzt wird, wobei die Umsetzung zur Bildung von quaternären Verbindungen führt.

8. Zusammensetzungen enthaltend die Guanidingruppen haltigen Polymere nach Anspruch 1 enthaltend das Strukturelement der Formel (la) oder bevorzugt die Verbindungen der Formel (I) oder mehr bevorzugt Produkte des Verfahrens nach Anspruch 5.

9. Verwendung der Guanidingruppen haltigen Polymere enthaltend das Strukturelement der Formel (la) und bevorzugt die Verbindungen der Formel (I), sowie ihre Zusammensetzungen als Katalysatoren in der Herstellung von Polyurethanen, als Härter für Epoxidharze, Alkoxysilylgruppen tragende Systeme und weitere basisch katalysierbare Formulierungen.

10. Verwendung der Guanidingruppen haltigen Polymere enthaltend das Strukturelement der Formel (la) und bevorzugt die Verbindungen der Formel (I), sowie ihre Zusammensetzungen als Dispergieradditiv in Lacken, Farben, Beschichtungsmitteln und Pigmentpasten.

## Claims

1. Polymeric guanidine-group-containing compounds, **characterized in that** they have the structural element 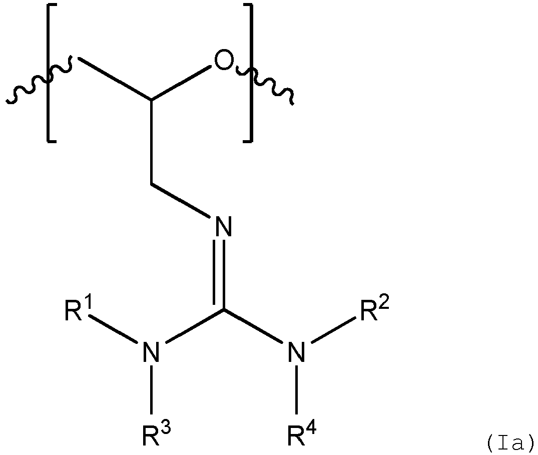 at least once in comb position,
where R¹, R², R³ and R⁴, independently of one another, are a linear, cyclic or branched, aliphatic saturated or unsaturated hydrocarbon radical having 1 up to 30 carbon atoms, or an aromatic hydrocarbon radical having 6 up to 30 carbon atoms, which can also contain heteroatoms.

2. Compounds according to Claim 1, **characterized in that** they satisfy the formula (I)
Z (-X-M1ₘ₁-M2ₘ₂-M3ₘ₃-M4ₘ₄-M5ₘ₅-M6ₘ₆-J)ᵢ (I)
where
M1 = 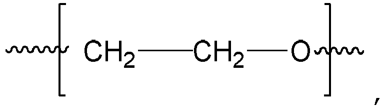
M2 = 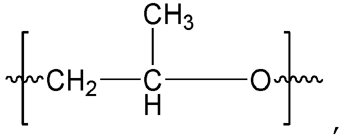
M3 = 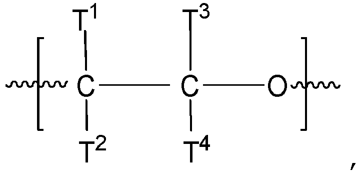 where T¹, T², T³ and T⁴, independently of one another, are hydrogen or linear, cyclic or branched, aliphatic or aromatic, saturated or unsaturated hydrocarbon radicals having 1 up to 12 carbon atoms, preferably 2 to 8 carbon atoms, which can optionally contain halogen atoms, with the proviso that T¹, T², T³ and T⁴ are not selected such that M3 is the same as M1 or M2, optionally in each case two radicals from T¹, T², T³ and T⁴ can also together form a three- to eight-membered ring,
M4 = 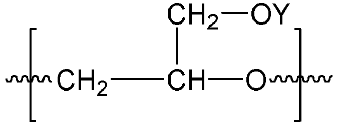 where Y, independently of the others, is a linear, cyclic or branched, aliphatic or aromatic, saturated or unsaturated hydrocarbon radical having 1 to 30 carbon atoms, preferably having 2 to 15 carbon atoms, which can also contain heteroatoms
M5 = 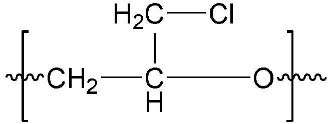
M6 = 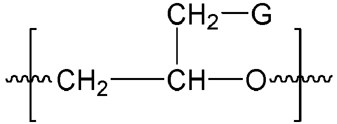 where G is a guanidine radical of the formula, 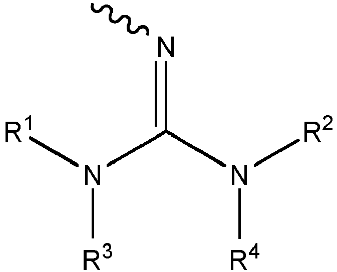 where
R¹, R², R³ and R⁴, independently of one another, are a linear, cyclic or branched, aliphatic saturated or unsaturated hydrocarbon radical having 1 up to 30 carbon atoms, or are an aromatic hydrocarbon radical having 6 up to 30 carbon atoms, which can also contain heteroatoms,
i = 1 to 10, preferably 1 to 4, particularly preferably 1 to 3,
m1, m2, m3, m4 and m5 = in each case independently of one another, 0 to 500,
m6 is greater than or equal to 1 to 100, preferably 1.5 to 50, more preferably 2 to 40 and particularly preferably greater than 2 to 30,
where the sum of m1 and m2 must be at least 3,
X = independently of the others O, NH, N-alkyl, N-aryl or S, preferably oxygen,
Z = is independently of the others an i-functional linear, cyclic or branched, aliphatic saturated or unsaturated hydrocarbon radical having 1 up to 30 carbon atoms, preferably having 2 up to 30 carbon atoms, further preferably having 3 to 25, more preferably having more than 3 up to 20, particularly preferably having 4 to 15 carbon atoms or Z is an aromatic hydrocarbon radical having 6 up to 30 carbon atoms, preferably more than 6 up to 20, particularly preferably 8 to 12 carbon atoms,
J independently of the others is hydrogen, a linear, cyclic or branched, aliphatic or aromatic, saturated or unsaturated hydrocarbon radical having 1 up to 30 carbon atoms, a carboxylic acid radical having 1 to 30 carbon atoms or a heteroatom-substituted, functional, organic, saturated or unsaturated radical.

3. Compounds according to Claim 1, **characterized in that** the indices and radicals of the formula (I) are
i = 1 to 2,
m1 = 0 to 30,
m2 = 3 to 500,
m3 = 0 to 20,
m4 = 0 to 20,
m5 = 0 to 10,
m6 = 1 to 30, and
J = hydrogen,
X = oxygen,
Y = an allyl radical,
R¹, R², R³ and R⁴, independently of one another, are linear or branched hydrocarbons having 1 to 8 carbon atoms,
T¹, T², T³ and T⁴, independently of one another, are hydrogen or linear or branched hydrocarbons having 2 to 8 carbon atoms, with the proviso that T¹, T², T³ and T⁴ are not selected such that M3 is the same as M1 or M2, and
Z = independently of one another mono- or divalent linear or branched saturated or unsaturated hydrocarbon radical having 2 to 18 carbon atoms.

4. Compounds according to Claim 1, **characterized in that** the indices and radicals of the formula (I)
i = 1 to 2,
m1 = 0 to 20,
m2 = 5 to 200,
m3 = to 10
m4 = 0 to 10
m5 = 0 to 3
m6 = 1 to 20, and
J = hydrogen,
X = oxygen,
R¹, R², R³ and R⁴ are methyl groups, and
Z = independently of one another allyl or butyl groups.

5. Process for the preparation of guanidine-group-containing polymers of Claim 1, where, in a first step (a), a compound of the formula (II)
Z-(OH)i (II)
where
Z = is independently of the others an i-functional linear, cyclic or branched, aliphatic saturated or unsaturated hydrocarbon radical having 1 up to 30 carbon atoms, preferably having 2 up to 30 carbon atoms, further preferably having 3 to 25, more preferably having more than 3 up to 20, particularly preferably having 4 to 15 carbon atoms or Z is an aromatic hydrocarbon radical having 6 up to 30 carbon atoms, preferably more than 6 up to 20, particularly preferably 8 to 12 carbon atoms,
i = 1 to 10, 1 to 4, 1 to 3,
is reacted, using a double metal cyanide catalyst, preferably zinc hexacyanocobaltate, with epichlorohydrin and further alkylene oxides, and subsequently, in a second step (b), is reacted with a guanidine compound of the formula (III) 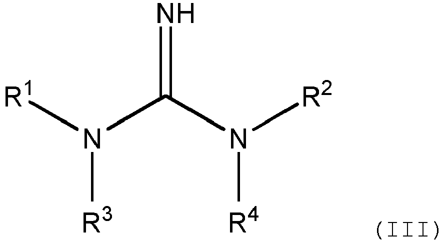 where
R¹, R², R³ and R⁴, independently of one another, are a linear, cyclic or branched, aliphatic saturated or unsaturated hydrocarbon radical having 1 up to 30 carbon atoms, or an aromatic hydrocarbon radical having 6 up to 30 carbon atoms, which can also contain heteroatoms.

6. Process according to Claim 5, **characterized in that** the process step (b) of the process according to the invention using from 1 to 3 equivalents of tetramethylguanidine at a temperature of 90°C to 160°C over the course of 8 to 30 hours, where the guanidinium chloride is filtered off and the excess tetramethylguanidine is distilled off at a temperature of 100°C and a pressure of 1.5 mbar.

7. Process according to Claim 5 or 6, **characterized in that** it optionally has a third step (c), in which the product of the second step (b) is further converted with the formation of at least one guanidinium group, the reaction leading to the formation of quaternary compounds.

8. Compositions comprising the guanidine-group-containing polymers according to Claim 1 comprising the structural element of the formula (Ia) or preferably the compounds of the formula (I) or more preferably products of the process according to Claim 5.

9. Use of the guanidine-group-containing polymers comprising the structural element of the formula (Ia) and preferably the compounds of the formula (I), and also their compositions as catalysts in the production of polyurethanes, as curing agents for epoxide resins, alkoxysilyl-group-carrying systems and further basically catalyzable formulations.

10. Use of guanidine-group-containing polymers comprising the structural element of the formula (Ia) and preferably the compounds of the formula (I), and their compositions as dispersion additive in coatings, paints, coating compositions and pigment pastes.

## Revendications

1. Composés polymères contenant des groupes guanidine, **caractérisés en ce qu'**ils présentent l'élément de structure 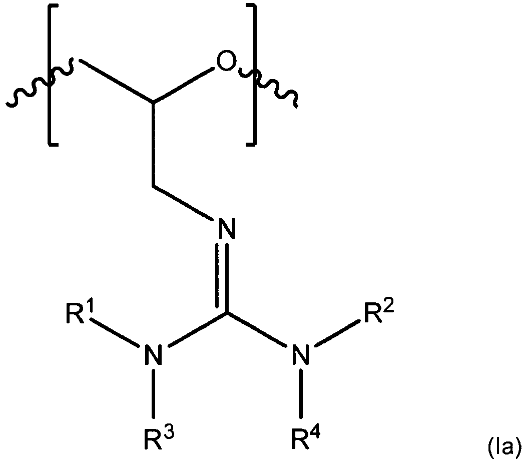 au moins une fois en position en peigne,
R¹, R², R³ et R⁴ représentant, indépendamment les uns des autres, un radical hydrocarboné linéaire, cyclique ou ramifié, aliphatique, saturé ou insaturé comprenant 1 à 30 atomes de carbone ou un radical hydrocarboné aromatique comprenant 6 à 30 atomes de carbone, qui peut également contenir des hétéroatomes.

2. Composés selon la revendication 1, **caractérisés en ce qu'**ils satisfont à la formule (I)
Z (-X-M1ₘ₁-M2ₘ₂-M3ₘ₃-M4ₘ₄-M5ₘ₅-M6ₘ₆-J)ᵢ (I)
dans laquelle
M1 = 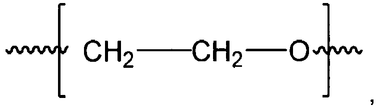 M2 = 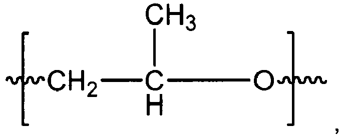
M3 = 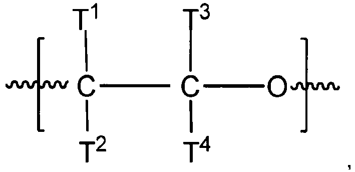 T¹, T², T³ et T⁴ représentant, indépendamment les uns des autres, hydrogène ou des radicaux hydrocarbonés linéaires, cycliques ou ramifiés, aliphatiques ou aromatiques, saturés ou insaturés comprenant 1 à 12 atomes de carbone, de préférence 2 à 8 atomes de carbone, qui peuvent le cas échéant contenir des atomes d'halogène, étant entendu que T¹, T², T³ et T⁴ ne sont pas choisis de manière telle que M3 représente M1 ou M2, éventuellement, à chaque fois deux radicaux parmi T¹, T², T³ et T⁴ pouvant également former ensemble un cycle de trois à huit chaînons,
M4 = 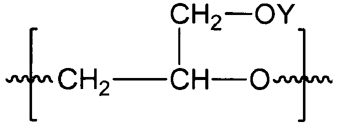 Y représentant, indépendamment, un radical hydrocarboné linéaire, cyclique ou ramifié, aliphatique ou aromatique, saturé ou insaturé comprenant 1 à 30 atomes de carbone, de préférence 2 à 15 atomes de carbone, qui peut également contenir des hétéroatomes,
**M5 =** 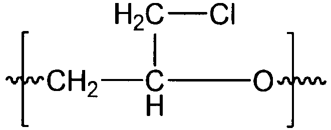
**M6 =** 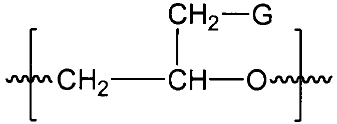 G représentant un radical guanidine de formule 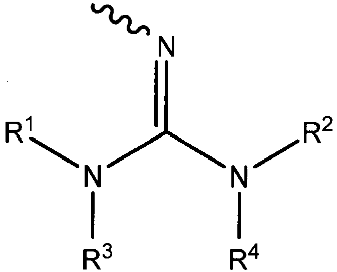 dans laquelle
R¹, R², R³ et R⁴ représentent, indépendamment les uns des autres, un radical hydrocarboné linéaire, cyclique ou ramifié, aliphatique, saturé ou insaturé comprenant 1 à 30 atomes de carbone ou un radical hydrocarboné aromatique comprenant 6 à 30 atomes de carbone, qui peut également contenir des hétéroatomes.
i = 1 à 10, de préférence 1 à 4, en particulier 1 à 3,
m1, m2, m3, m4 et m5 = à chaque fois, indépendamment les uns des autres, 0 à 500,
m6 supérieur à 1 jusqu'à 100, de préférence 1,5 à 50, plus préférablement 2 à 40 et en particulier de préférence supérieur à 2 jusqu'à 30,
la somme de m1 et de m2 devant valoir au moins 3,
X = indépendamment, O, NH, N-alkyle, N-aryle ou S, de préférence oxygène,
Z = indépendamment, un radical hydrocarboné i-fonctionnel linéaire, cyclique ou ramifié, aliphatique, saturé ou insaturé, comprenant 1 à 30 atomes de carbone, de préférence 2 à 30 atomes de carbone, plus préférablement 3 à 25, encore plus préférablement plus de 3 à 20, de manière particulièrement préférée 4 à 15 atomes de carbone ou Z représente un radical hydrocarboné aromatique comprenant 6 à 30 atomes de carbone, de préférence plus de 6 à 20, en particulier de préférence 8 à 12 atomes de carbone,
J représente, indépendamment, hydrogène, un radical hydrocarboné linéaire, cyclique ou ramifié, aliphatique ou aromatique, saturé ou insaturé comprenant 1 à 30 atomes de carbone, un radical acide carboxylique comprenant 1 à 30 atomes de carbone ou un radical substitué par des hétéroatomes, fonctionnel, organique, saturé ou insaturé.

3. Composés selon la revendication 1, **caractérisés en ce que** les indices et les radicaux de formule (I) représentent
i = 1 à 2,
m1 = 0 à 30,
m2 = 3 à 500,
m3 = 0 à 20,
m4 = 0 à 20,
m5 = 0 à 10,
m6 = 1 à 30 et
J = hydrogène,
X = oxygène
Y = un radical allyle,
R¹, R², R³ et R⁴ représentent, indépendamment les uns des autres, des hydrocarbures linéaires ou ramifiés comprenant 1 à 8 atomes de carbone,
T¹, T², T³ et T⁴ représentent, indépendamment les uns des autres, hydrogène ou des hydrocarbures linéaires ou ramifiés comprenant 2 à 8 atomes de carbone, étant entendu que T¹, T², T³ et T⁴ ne sont pas choisis de manière telle que M3 représente M1 ou M2 et
Z = indépendamment, un radical hydrocarboné monovalent ou divalent, linéaire ou ramifié, saturé ou insaturé comprenant 2 à 18 atomes de carbone.

4. Composés selon la revendication 1, **caractérisés en ce que** les indices et les radicaux de formule (I) représentent
i = 1 à 2,
m1 = 0 à 20,
m2 = 5 à 200,
m3 = jusqu'à 10
m4 = 0 à 10
m5 = 0 à 3
m6 = 1 à 20 et
J = hydrogène,
X = oxygène
R¹, R², R³ et R⁴ représentent des groupes méthyle et
Z = représente, indépendamment, des groupes allyle ou butyle.

5. Procédé pour la préparation de polymères contenant des groupes guanidine selon la revendication 1, dans lequel, dans une première étape (a), un composé de formule (II)
Z-(OH)i (II)
dans laquelle
Z = indépendamment, un radical hydrocarboné i-fonctionnel linéaire, cyclique ou ramifié, aliphatique, saturé ou insaturé, comprenant 1 à 30 atomes de carbone, de préférence 2 à 30 atomes de carbone, plus préférablement 3 à 25, encore plus préférablement plus de 3 à 20, de manière particulièrement préférée 4 à 15 atomes de carbone ou Z représente un radical hydrocarboné aromatique comprenant 6 à 30 atomes de carbone, de préférence plus de 6 à 20, en particulier de préférence 8 à 12 atomes de carbone,
i = 1 à 10, 1 à 4, 1 à 3,
est transformé, avec utilisation d'un catalyseur de type cyanure métallique double, de préférence l'hexacyanocobaltate de zinc, avec de l'épichlorhydrine et d'autres oxydes d'alkylène et ensuite, dans une deuxième étape (b), avec un composé de type guanidine de formule (III) 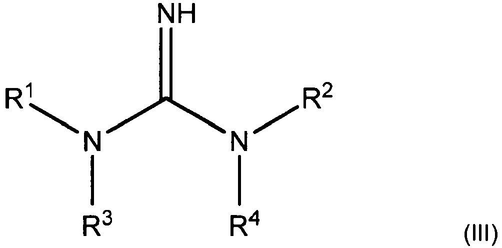
dans laquelle
R¹, R², R³ et R⁴ représentent, indépendamment les uns des autres, un radical hydrocarboné linéaire, cyclique ou ramifié, aliphatique, saturé ou insaturé comprenant 1 à 30 atomes de carbone ou un radical hydrocarboné aromatique comprenant 6 à 30 atomes de carbone, qui peut également contenir des hétéroatomes.

6. Procédé selon la revendication 5, **caractérisé en ce que** l'étape de procédé (b) du procédé selon l'invention avec utilisation de 1 à 3 équivalents de tétraméthylguanidine à une température de 90°C à 160°C en 8 à 30 heures, le chlorure de guanidinium étant séparé par filtration et l'excès de tétraméthylguanidine étant éliminé par distillation à une température de 100°C et à une pression de 1,5 mbars.

7. Procédé selon la revendication 5 ou 6, **caractérisé en ce qu'**il présente éventuellement une troisième étape (c), dans laquelle le produit de la deuxième étape (b) est transformé davantage avec formation d'au moins un groupe guanidinium, la transformation conduisant à la formation de composés quaternaires.

8. Compositions contenant les polymères contenant des groupes guanidine selon la revendication 1, contenant l'élément de structure de formule (Ia) ou de préférence les composés de formule (I) ou plus préférablement des produits du procédé selon la revendication 5.

9. Utilisation des polymères contenant des groupes guanidine contenant l'élément de structure (Ia) et de préférence les composés de formule (I), ainsi que leurs compositions comme catalyseurs dans la préparation de polyuréthanes, comme durcisseurs pour des résines époxyde, des systèmes portant des groupes alcoxysilyle et d'autres formulations catalysables par voie basique.

10. Utilisation des polymères contenant des groupes guanidine contenant l'élément de structure (Ia) et de préférence les composés de formule (I), ainsi que leurs compositions comme additif de dispersion dans des laques, des peintures, des agents de revêtement et des pâtes pigmentaires.
